# FASCICULE DE BREVET EUROPEEN

(11) **EP 2 839 181 B1**
(45) Date de publication et mention de la délivrance du brevet: **24.08.2016**
(21) Numéro de dépôt: 13722488.7
(22) Date de dépôt: 17.04.2013
(51) Int. Cl.: F16F 15/14

(54) **DISPOSITIF D'AMORTISSEMENT PENDULAIRE, EN PARTICULIER POUR UNE TRANSMISSION DE VÉHICULE AUTOMOBILE**
PENDELARTIGE DÄMPFUNGSVORRICHTUNG, INSBESONDERE FÜR EIN KRAFTFAHRZEUGGETRIEBE
PENDULAR DAMPING DEVICE, ESPECIALLY FOR A MOTOR VEHICLE TRANSMISSION

(30) Priorité: 20.04.2012 FR 1253658
(43) Date de publication de la demande: 25.02.2015
(73) Titulaire: Valeo Embrayages, 80009 Amiens Cedex 2 (FR)
(72) Inventeur: VERHOOG, Roel, F-60190 Gournay Sur Aronde (FR)
(74) Mandataire: Cardon, Nicolas
(86) Numéro de dépôt international: PCT/FR2013/050839
(87) Numéro de publication internationale: WO 2013/156733

(56) Documents cités:
- DE-A1-102011 012 276
- US-A1- 2011 186 395

## Description

La présente invention concerne un dispositif d'amortissement pendulaire, en particulier pour une transmission de véhicule automobile.

Les documents DE 10 2010 049 556, DE 10 2004 011 830 et WO 2010/066218 décrivent chacun un dispositif d'amortissement pendulaire, en particulier pour une transmission de véhicule automobile, comportant des masses pendulaires montées de façon mobile sur un support apte à pivoter autour d'un axe. Deux rouleaux sont montés radialement entre la périphérie radialement externe de chaque masse pendulaire et une partie radialement externe du support de sorte que, en fonctionnement, la masse pendulaire s'appuie radialement vers l'extérieur sur les rouleaux, ces derniers s'appuyant eux-mêmes radialement vers l'extérieur sur le support.

Les centres de gravité des masses pendulaires sont donc situés radialement à l'intérieur des zones de contact entre les masses pendulaires et les rouleaux, ce qui engendre un risque de basculement des masses hors du plan radial.

De tels dispositifs, dans lesquels les rouleaux travaillent en compression, sont relativement fiables.

Dans le document DE 10 2010 049 556 par exemple, une plaque annulaire radiale est montée sur le support afin de limiter le basculement des masses pendulaires et maintenir axialement les rouleaux.

Les masses des masses pendulaires sont relativement faibles et ne peuvent pas être augmentées sans nécessiter une reconception du dispositif. En effet, l'encombrement disponible pour loger chacune des masses pendulaires, délimité notamment par le support et la plaque de maintien précitée, est relativement limité. L'efficacité d'un tel dispositif d'amortissement pendulaire est donc également limitée.

L'invention a notamment pour but d'apporter une solution simple, efficace et économique à ce problème.

Le document DE 10 2011 012276 A1, qui est considéré comme étant l'état de la technique le plus proche de l'objet de la revendication indépendante 1, décrit un dispositif d'amortissement pendulaire pour une transmission de véhicule automobile, comportant au moins une masse pendulaire dont une partie centrale est montée de façon mobile sur un support apte à pivoter autour d'un axe, et au moins un rivet pour limiter de la mouvement de la masse pendulaire par rapport au support la masse pendulaire comportant au moins une partie latérale fixée à la partie centrale et conçue de façon à ce que le centre de gravité de la masse pendulaire soit situé radialement à l'extérieur des zones de contact entre la partie latérale de la masse pendulaire et le rivet.

A cet effet, elle propose un dispositif d'amortissement pendulaire, en particulier pour une transmission de véhicule automobile, comportant au moins une masse pendulaire dont une partie centrale est montée de façon mobile sur un support apte à pivoter autour d'un axe, et au moins un rouleau monté radialement entre la périphérie radialement externe de la partie centrale et une partie radialement externe du support de sorte qu'en fonctionnement, la partie centrale de la masse pendulaire s'appuie radialement vers l'extérieur sur le rouleau, ce dernier s'appuyant lui-même radialement vers l'extérieur sur le support, caractérisé en ce que la masse pendulaire comporte au moins une partie latérale fixée à la partie centrale et conçue de façon à ce que le centre de gravité de la masse pendulaire soit situé radialement à l'extérieur des zones de contact entre la partie centrale de la masse pendulaire et le rouleau.

Le décalage du centre de gravité à l'extérieur des zones de contact précitées améliore la stabilité des masses. La partie latérale permet en outre d'augmenter de façon substantielle la masse de la masse pendulaire, et donc également son efficacité. L'efficacité de la masse pendulaire est également accrue par le décalage de son centre de gravité, radialement vers l'extérieur.

Selon une caractéristique de l'invention, la masse pendulaire comporte deux parties latérales opposées, fixées à la partie centrale et s'étendant de part et d'autre du support.

La masse pendulaire a alors une structure symétrique et équilibrée.

Le support peut comporter au moins une fenêtre dans laquelle est montée la partie centrale de la masse pendulaire.

En outre, la périphérie radialement externe de la partie centrale de la masse pendulaire et la partie radialement externe du support peuvent comporter chacun une zone concave formant un chemin de roulement pour un rouleau.

Selon une autre caractéristique de l'invention, chaque partie latérale est une plaque ayant une forme générale d'arc, dont la périphérie radialement externe est située radialement à l'extérieur de la périphérie externe de la partie centrale de la masse pendulaire, en regard de la partie radialement externe du support.

Dans une forme de réalisation de l'invention, au moins l'une des parties latérales comporte un plot inséré dans un trou du support, ledit trou étant oblong en forme d'arc et ledit plot pouvant se déplacer le long de ce trou, ou inversement, le déplacement de la masse pendulaire étant limité par butée du plot sur les extrémités circonférentielles dudit trou.

La périphérie radialement interne et/ou les extrémités circonférentielles de la partie centrale de la masse pendulaire peuvent comporter des moyens de butée déformables élastiquement, destinés à venir en appui contre le support.

En variante, les extrémités circonférentielles de la partie latérale de la masse pendulaire sont aptes à venir en appui contre des organes de butée du support.

De plus, au moins une zone de la partie centrale de la masse pendulaire peut être formée d'une pièce avec au moins l'une des parties latérales.

Les extrémités des rouleaux peuvent comporter des zones restreintes d'appui sur les parties latérales des masses pendulaires de façon à limiter le déplacement latéral du rouleau.

L'invention concerne également un dispositif de transmission de couple comportant un élément d'entrée de couple et un élément de sortie de couple, caractérisé en ce qu'il comporte un dispositif d'amortissement pendulaire du type précité, l'élément de sortie de couple comportant un voile annulaire servant de support pour au moins une masse pendulaire, des organes élastiques étant montés entre l'élément d'entrée de couple et le voile annulaire.

En variante, l'invention concerne aussi un dispositif de transmission de couple pour un véhicule automobile, comportant un élément d'entrée de couple, un élément de sortie de couple, et au moins un groupe d'organes élastiques montés entre les éléments d'entrée et de sortie de couple et agissant à l'encontre de la rotation de l'un desdits éléments par rapport à l'autre, les organes élastiques de ce groupe étant agencés en série par l'intermédiaire d'un organe de phasage de façon à ce que les organes élastiques dudit groupe se déforment en phase les uns avec les autres, caractérisé en ce qu'il comporte un dispositif d'amortissement pendulaire du type précité, l'organe de phasage formant le support de la masse pendulaire.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue éclatée, en perspective, d'un dispositif de transmission de couple équipé d'un dispositif d'amortissement pendulaire selon une première forme de réalisation de l'invention,
- la figure 2 est une vue en coupe longitudinale du dispositif de transmission de couple de la figure 1,
- la figure 3 est une vue en perspective, partiellement éclatée, du dispositif d'amortissement pendulaire des figures 1 et 2,

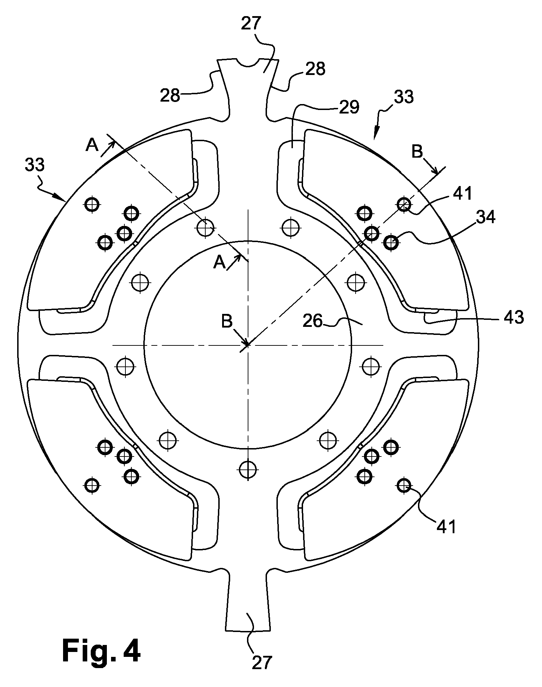

- la figure 4 est une vue de face du dispositif d'amortissement pendulaire de la figure 3,

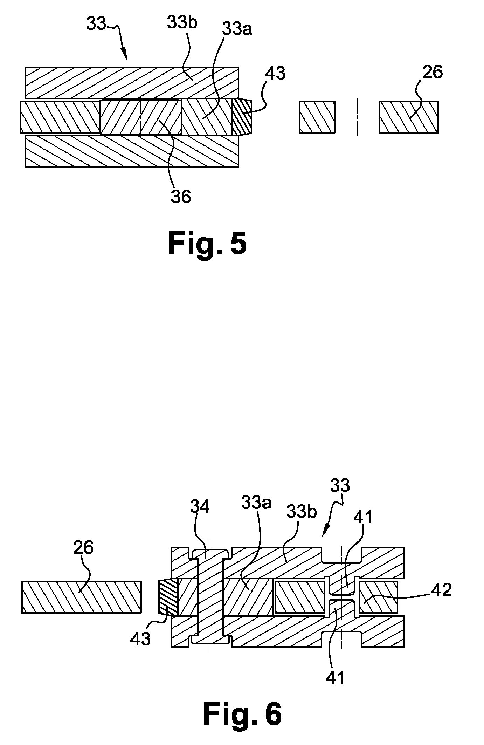

- les figures 5 et 6 sont respectivement des vues des sections A-A et B-B de la figure 4,
- les figures 7 et 8 sont des vues en coupe partielle du dispositif d'amortissement précité, dans deux positions différentes des masses pendulaires,
- la figure 9 est une vue en perspective d'une partie d'un dispositif de transmission de couple équipé d'un dispositif d'amortissement pendulaire, selon une deuxième forme de réalisation,

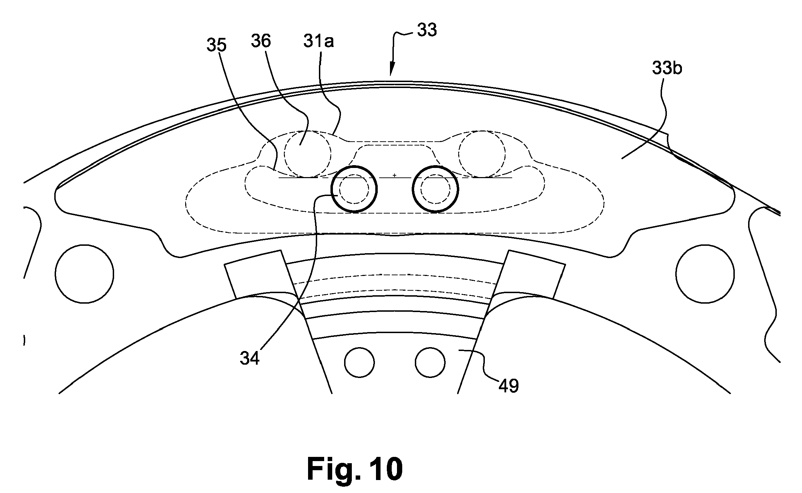

- la figure 10 est une vue de face d'une partie du dispositif d'amortissement pendulaire de la figure 9,
- les figures 11 à 13 sont des vues en coupe longitudinale d'une partie du dispositif d'amortissement pendulaire de la figure 10, et illustrent respectivement trois variantes,
- la figure 14 est une vue de face d'une partie du dispositif d'amortissement pendulaire selon une troisième forme de réalisation de l'invention,
- les figures 15 et 16 sont des vues en coupe d'une partie du dispositif d'amortissement pendulaire de la figure 14, illustrant deux variantes possibles.

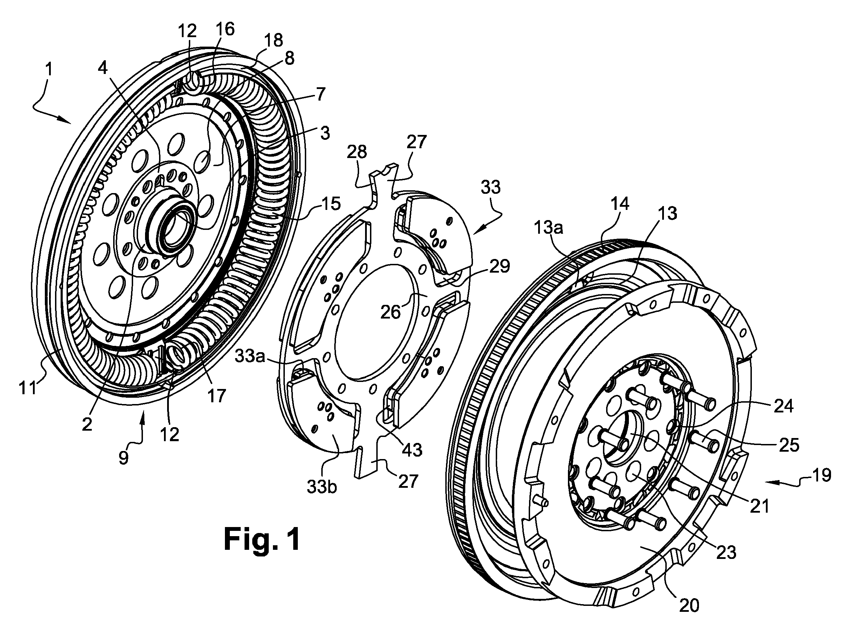

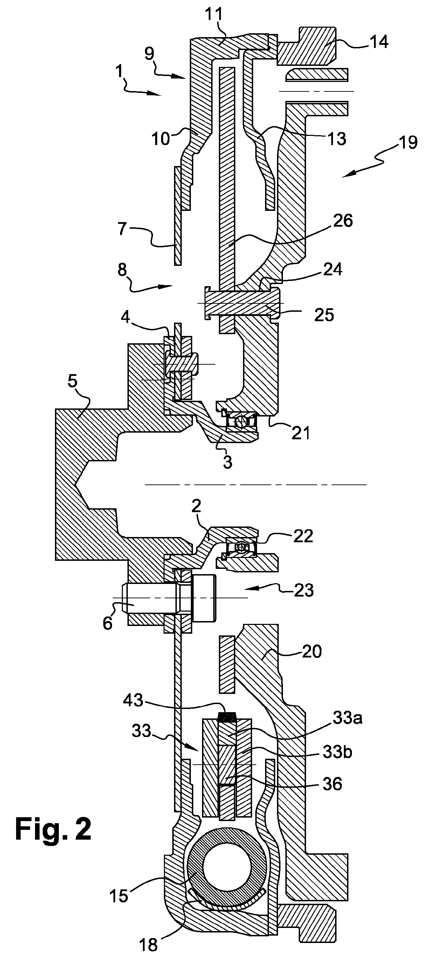

Un dispositif de transmission de couple selon une première forme de réalisation de l'invention, se présentant sous la forme d'un double volant amortisseur, est représenté aux figures 1 et 2. Il comporte un volant primaire 1 comprenant un moyeu central 2, appelé moyeu primaire, comprenant une partie tubulaire cylindrique 3 à partir de laquelle une partie radiale 4 s'étend radialement vers l'extérieur. La partie radiale 4 du moyeu primaire 2 est fixée à l'extrémité d'un vilebrequin 5 (figure 2) d'un moteur à combustion interne, par l'intermédiaire de vis 6. Cette partie radiale 4 est également fixée à la périphérie radialement interne d'une tôle annulaire 7, flexible axialement ou non, Cette tôle 7 comporte des trous 8 en partie médiane, dont la fonction sera décrite plus loin.

Une masse d'inertie primaire 9 de forme annulaire est fixée à la périphérie radialement externe de la tôle annulaire 7.

La masse d'inertie primaire 9 comporte une partie 10 (figure 2) s'étendant radialement et dont la périphérie radialement externe est prolongée vers l'avant par un rebord cylindrique 11. La face avant de la partie radiale 10 comporte deux éléments en saillie 12 (figure 1) diamétralement opposés, destinées à former des faces d'appui.

Le bord libre du rebord cylindrique 11 est fixé, par exemple par soudage, à la périphérie radialement externe d'une autre tôle annulaire 13, plus particulièrement à la face radiale arrière de cette tôle 13. Une couronne dentée 14, destinée à engrener avec une courroie de démarreur, est fixée sur la face avant de la tôle 13.

La tôle 13 comporte deux éléments 13a en saillie axialement vers l'arrière, diamétralement opposés, disposés en regard des éléments en saillie 12 de la masse d'inertie primaire et formant chacun deux faces d'appui.

La masse d'inertie primaire 9 et la tôle annulaire 13 délimitent un espace interne, destiné à être rempli de graisse et servant au logement d'organes élastiques courbes 15.

Ces organes élastiques 15 sont des ressorts de compression hélicoïdaux, montés dans l'espace interne précité. Plus particulièrement, lors du montage, les extrémités 16, 17 des organes élastiques courbes viennent en appui contre les faces d'appui définies par les organes en saillie 12, 13a. La masse d'inertie primaire 9 et la tôle annulaire 13 forment ainsi des rondelles de guidage.

Des goulottes 18 sont montées entre la paroi interne du rebord cylindrique 11 et les organes élastiques 15, ces goulottes 18 servant à l'appui des organes élastiques 15 lorsque ceux-ci se déforment par centrifugation en fonctionnement.

Un volant d'inertie secondaire 19 est centré et monté mobile en rotation sur le volant d'inertie primaire 1.

Le volant d'inertie secondaire 19 comporte une masse d'inertie dite secondaire 20, comportant en son centre un alésage 21 servant au montage et au centrage de la masse d'inertie secondaire 20 sur la partie cylindrique 3 du moyeu primaire 2, par l'intermédiaire d'un roulement à billes 22 (figure 2).

La masse d'inertie secondaire 20 comporte des trous 23 (figure 1) servant au passage d'un outil de vissage ou de dévissage des vis de fixation 6 du volant primaire 1 sur l'extrémité du vilebrequin 5, et des trous 24 servant au montage de rivets 25. Ces rivets 25 permettent notamment de fixer un voile annulaire 26 à la seconde masse d'inertie 20. Les trous 8 formés dans la tôle 7 du volant d'inertie primaire 1 sont ménagés en regard des rivets 25 et permettent le passage d'un outil de rivetage.

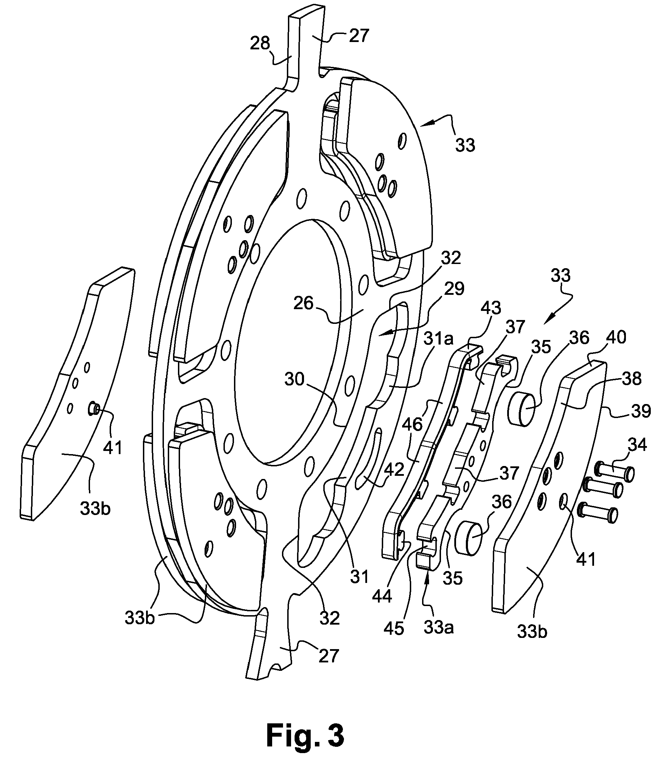

Comme cela est mieux visible à la figure 3, le voile annulaire 26 comporte une partie annulaire à partir de laquelle deux pattes diamétralement opposées 27 s'étendent radialement vers l'extérieur.

Chaque patte 27 comporte deux faces 28 opposées d'appui des organes élastiques, qui forment un angle l'une par rapport à l'autre et qui divergent l'une de l'autre vers l'extérieur.

Les organes élastiques 15 permettent d'amortir et d'absorber les vibrations et les acyclismes de rotation du moteur, comme cela est connu en soi.

Dans un mode de réalisation non représenté, les organes élastiques 15 sont associés à des moyens de friction permettant de dissiper l'énergie par frottement.

Au contraire, dans le mode de réalisation représenté, aucun moyen de friction supplémentaire n'est ajouté, l'énergie étant dissipée par le frottement naturel entre la masse primaire 9 et la masse secondaire 19, en grande partie dû au frottement des organes élastiques 15.

Le voile annulaire 26 comporte des fenêtres 29, par exemple quatre fenêtres régulièrement réparties, chaque fenêtre étant délimitée par un bord périphérique interne 30, un bord périphérique externe 31 et deux extrémités circonférentielles 32 (figure 3). Le bord périphérique externe 31 comporte deux zones concaves 31 a.

Des masses pendulaires 33 sont montées sur le voile annulaire, comme cela est mieux visible à la figure 3, chaque masse pendulaire 33 comportant une partie centrale 33a, montée dans la fenêtre 29, et deux parties latérales 33b fixées de part et d'autre de la partie centrale 33a, à l'extérieur de la fenêtre correspondante 29. Les parties latérales 33b sont fixées à la partie centrale 33a par des rivets 34 (figure 3), par exemple au nombre de trois.

La partie centrale 33a présente une forme générale d'arc et comporte un bord radialement interne, un bord radialement externe et deux extrémités circonférentielles. Le bord radialement externe comporte deux zones concaves 35 formant des chemins de roulement pour deux rouleaux 36. Le bord radialement interne est composé de deux zones 37 s'étendant chacune sur une moitié dudit bord, chaque zone 37 étant courbe et présentant un rayon de courbure sensiblement égal au rayon du bord interne 30 de la fenêtre correspondante 29 du voile annulaire 26.

Chaque partie latérale 33b a une forme générale d'arc et comporte un bord radialement interne 38, un bord radialement externe 39 et deux extrémités circonférentielles 40 (figure 3). Les bords radialement externes 39 des parties latérales 33b sont situés radialement à l'extérieur des bords radialement externes 31 des fenêtres 29.

Chaque partie latérale 33b comporte un plot 41, les plots 41 des deux parties latérales 33b d'une même masse pendulaire 33 étant insérés dans un trou oblong 42 en forme d'arc du voile annulaire 26 et pouvant se déplacer le long de ce trou (figures 3, 7 et 8). Le déplacement de la masse pendulaire 33 est limité par butée desdits plots 41 sur les extrémités circonférentielles dudit trou oblong 42.

Chaque partie centrale 33a peut comporter des moyens d'amortissement élastiquement déformables au niveau de ses extrémités circonférentielles et de son bord radialement interne 37, destinées à venir en appui contre les extrémités circonférentielles 32 et le bord radialement interne 30 de la fenêtre correspondante 29. Ces moyens d'amortissement sont par exemple formés par une bande en élastomère 43 s'étendant de manière continue d'une extrémité circonférentielle à une autre, en passant par le bord radialement interne de la partie centrale 33a. Cette bande 43 comporte des plots 44 en queue d'aronde sur sa face tournée vers la partie centrale 33a, insérés et bloqués dans des ouvertures 45 de forme complémentaire de la partie centrale 33a débouchant au niveau des extrémités circonférentielles et du bord radialement interne. En outre, la forme de la bande 43 suit le profil du bord périphérique interne de la partie centrale 33a, de sorte que cette bande 43 présente également deux zones concaves adjacentes 46, chaque zone 46 ayant un rayon de courbure sensiblement égal au rayon du bord radialement interne 30 de la fenêtre correspondante 29. De préférence, le bord radialement interne de la partie centrale 33a est situé radialement à l'extérieur par rapport aux bords radialement internes 38 des parties latérales 33b, de manière à bien emprisonner et maintenir la bande 43 entre les parties latérales 33b après montage.

La bande 43 fait saillie au-delà des extrémités circonférentielles 40 et du bord interne 38 des parties latérales 33b des masses 33, afin de venir en appui sur les extrémités circonférentielles 32 et sur le bord interne 30 de la fenêtre 29 correspondante.

En fonctionnement, lorsqu'un couple est transmis du volant primaire 1 au volant secondaire 19, les organes élastiques 15 prennent appui, à une première extrémité 16 ou 17, contre les faces d'appui 12, 13a du volant primaire 1, et à une seconde extrémité 17 ou 16 contre les faces d'appui 28 des pattes 27 du voile annulaire 26, appartenant au volant secondaire 19.

La rotation du voile annulaire 26 provoque la centrifugation des masses pendulaires 33, qui s'appuient sur le voile annulaire 26 par l'intermédiaire des rouleaux 36. Ces derniers sont donc sollicités en compression.

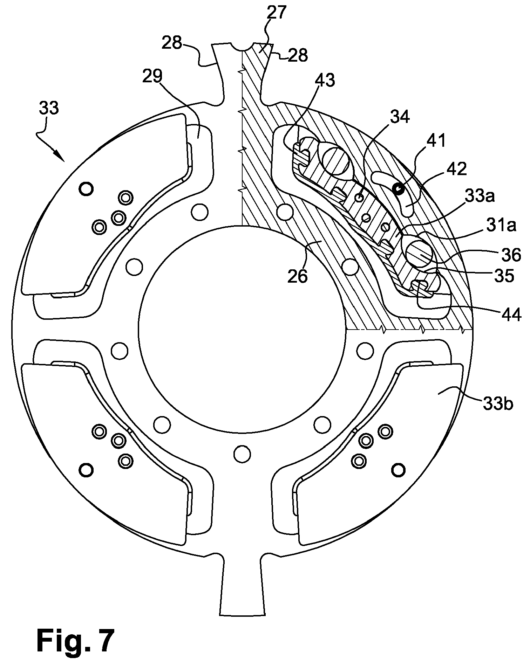

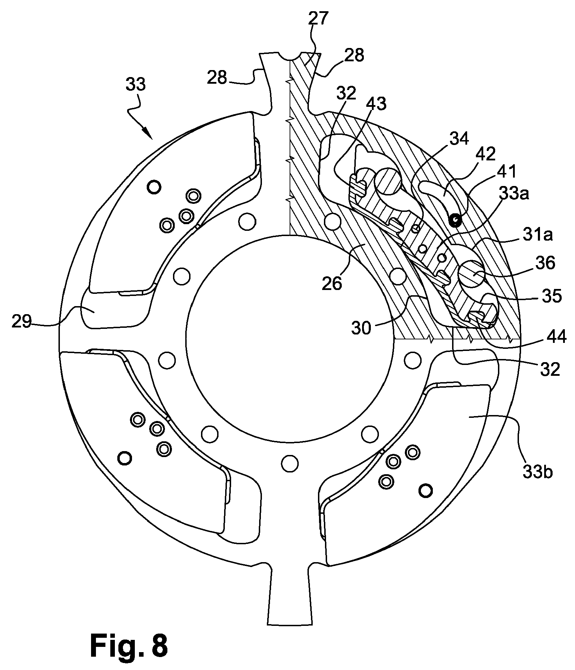

En outre, les masses pendulaires 33 peuvent rouler sur les rouleaux 36 et se déplacer à la manière de pendules par rapport au voile annulaire 26. La trajectoire des masses pendulaires 33 est notamment définie par la forme des zones concaves 31 a, 35. Les masses 33 peuvent ainsi osciller de manière pendulaire entre deux positions extrêmes (dont l'une est illustrée à la figure 8), en passant par la position intermédiaire représentée à la figure 7.

Ce mouvement pendulaire des masses 33 permet d'amortir et d'absorber les vibrations et les acyclismes de rotation du moteur.

La forme des parties latérales 33b est telle que le centre de gravité de chaque masse pendulaire 33 est situé radialement à l'extérieur des zones de contact entre la partie centrale 33a de la masse pendulaire 33 et les rouleaux 36.

Le décalage du centre de gravité à l'extérieur des zones de contact précitées améliore la stabilité des masses pendulaires 33. Les parties latérales 33b permettent en outre d'augmenter de façon substantielle la masse de chacune des masses pendulaires 33, et donc également son efficacité. On rappelle également que, plus le centre de gravité d'une masse pendulaire 33 est éloigné de l'axe de rotation de son support, plus l'efficacité de la masse pendulaire 33 est importante.

La figure 7 montre les masses pendulaires 33 dans une position dans laquelle elles sont centrées circonférentiellement dans les fenêtres 29.

La figure 8 montre au contraire les masses pendulaires 33 dans une position de butée dans laquelle elles viennent en butée contre les extrémités 32 des fenêtres 29 et contre les bords internes 30 des fenêtres 29, par l'intermédiaire de la bande élastomère 43.

Dans cette position de butée, les masses 33 sont positionnées de manière oblique par rapport à la direction circonférentielle.

Parallèlement, l'écrasement de la bande élastomère 43 est limité par butée des pions 41 sur l'extrémité correspondante du trou oblong 42.

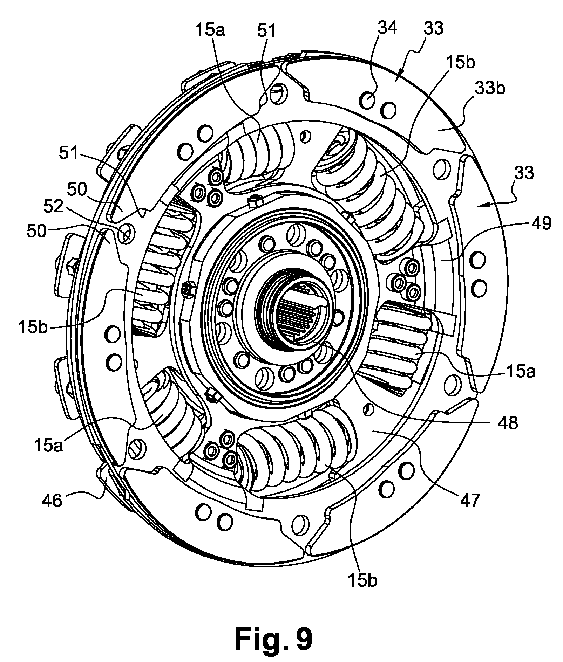

La figure 9 illustre un dispositif d'amortissement pendulaire selon une autre forme de réalisation de l'invention, comportant classiquement un élément d'entrée de couple, un élément de sortie de couple, et deux groupes d'organes élastiques 15a, 15b montés entre les éléments d'entrée et de sortie de couple et agissant à l'encontre de la rotation de l'un desdits éléments d'entrée et de sortie de couple par rapport à l'autre.

L'élément d'entrée de couple est dans ce cas formé par deux rondelles de guidage, dont une seule, référencée 46, est visible sur la figure 9. L'élément de sortie de couple est ici formé par un voile annulaire 47 riveté sur un moyeu interne 48 destiné à être couplé à un arbre d'entrée d'une boîte de vitesses.

Comme cela est connu en soi, les organes élastiques 15a, 15b de chaque groupe sont agencés en série par l'intermédiaire d'un organe de phasage 49 de façon à ce que les organes élastiques 15a, 15b de chaque groupe se déforment en phase les uns avec les autres.

Dans cette forme de réalisation, les masses pendulaires 33 sont supportées par l'organe de phasage 49.

Comme précédemment, des fenêtres 29 sont ménagées dans l'organe de phasage 49, les parties centrales 33a des masses pendulaires 33 étant montées dans les fenêtres 29. Des parties latérales 33b sont en outre montées de part et d'autre de chaque partie centrale 33a.

Les extrémités circonférentielles 33b des parties latérales des masses pendulaires comportent chacune une première zone située radialement à l'extérieur, formant un doigt 50 dont l'extrémité arrondie est apte à venir en appui sur le doigt opposé 50 de la masse adjacente 33.

Les extrémités circonférentielles des parties latérales 33b des masses pendulaires 33 comportent en outre des secondes zones 51 présentant des surfaces planes et s'étendant sensiblement radialement, destinées à venir en appui sur des plots de butée montés dans des trous 52 de l'organe de phasage 49.

Comme précédemment, la forme des parties latérales 33b est telle que le centre de gravité de chaque masse pendulaire 33 est situé radialement à l'extérieur des zones de contact entre la partie centrale 33a de la masse pendulaire 33 et les rouleaux 36.

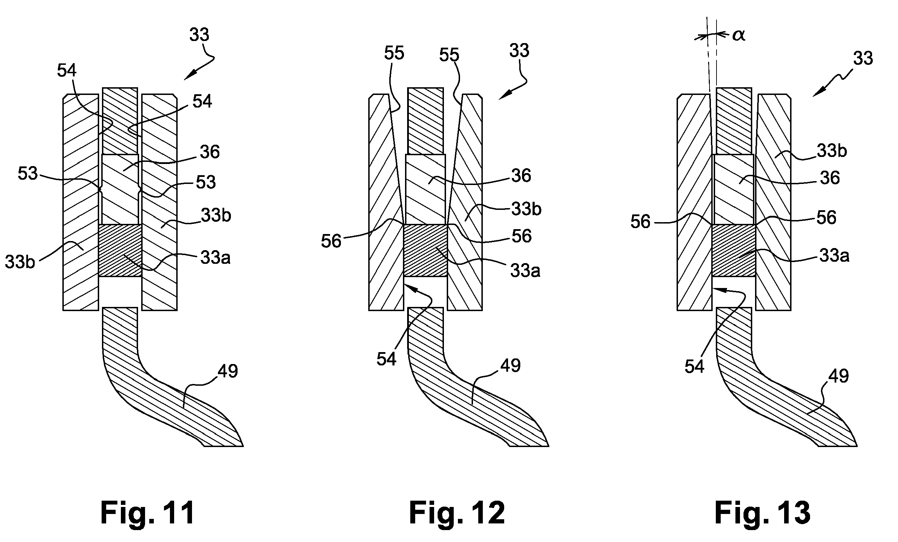

Comme cela est représenté à la figure 11, les extrémités des rouleaux 36 peuvent comporter des picots 53 situés sur l'axe des rouleaux et destinés à venir en appui sur les faces en regard dites faces internes 54 des parties latérales 33b des masses 33. Ceci permet de limiter le déplacement latéral des rouleaux 36 tout en ayant une surface de frottement limitée.

Dans une variante illustrée à la figure 12, les faces internes 54 des parties latérales 33b des masses 33 peuvent comporter des zones 55 radialement externes chanfreinées s'écartant l'une de l'autre dans la direction radialement externe. De cette manière, en fonctionnement, le déplacement latéral des rouleaux 36 est limité par appui de ces derniers sur les faces internes 54, au niveau de zones ponctuelles 56 situées radialement à l'intérieur, c'est-à-dire dans une zone de faible vitesse générant peu de frottement.

Enfin, la figure 13 illustre une autre variante dans laquelle les faces internes 54 forment un angle α avec la direction radiale, de façon à s'écarter l'une de l'autre dans la direction radialement externe. Cet angle est réalisé par emboutissage ou directement par la forme de la partie centrale 33a correspondante. Dans ce cas également, le déplacement latéral des rouleaux 36 est limité par appui de ces derniers sur les faces internes 54, au niveau de zones ponctuelles 56 situées radialement à l'intérieur, c'est-à-dire dans une zone de faible vitesse générant peu de frottement.

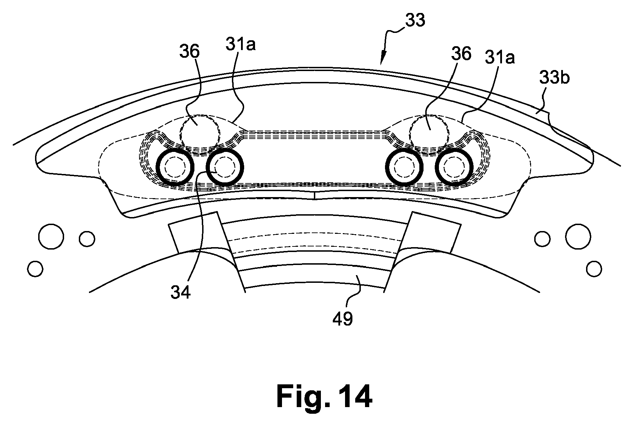

Les figures 13 à 16 illustrent d'autres formes de réalisation, qui diffèrent de la forme de réalisation de la figure 9 en ce qu'au moins une zone de la partie centrale 33a vient de matière avec l'une au moins des parties latérales 33b.

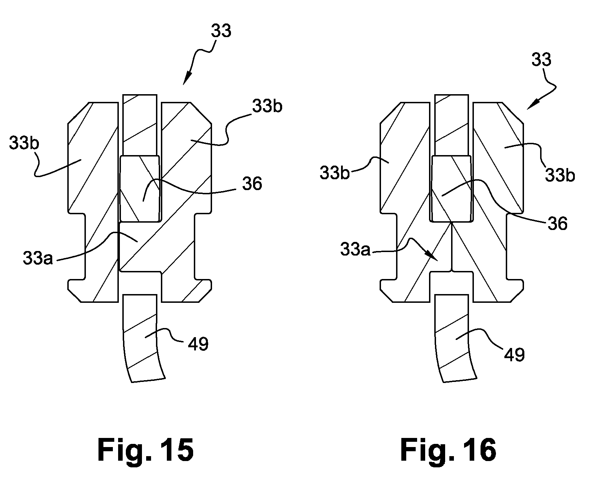

En particulier, la figure 15 illustre une variante dans laquelle la partie centrale 33a est formée intégralement avec l'une des parties latérales 33b. La figure 16 illustre une autre variante dans laquelle une première moitié de la partie centrale 33a est formée intégralement avec l'une des parties latérales 33b, une seconde moitié de la partie centrale 33a étant formée intégralement avec l'autre des parties latérales 33b.

Dans ces cas également, la forme des parties latérales 33b est telle que le centre de gravité de chaque masse pendulaire 33 est situé radialement à l'extérieur des zones de contact entre la partie centrale 33a de la masse pendulaire 33 et les rouleaux 36.

## Revendications

1. Dispositif d'amortissement pendulaire, en particulier pour une transmission de véhicule automobile, comportant au moins une masse pendulaire (33) dont une partie centrale (33a) est montée de façon mobile sur un support (26, 49) apte à pivoter autour d'un axe, et au moins un rouleau (36) monté radialement entre la périphérie radialement externe de la partie centrale (33a) et une partie radialement externe du support (26, 49) de sorte qu'en fonctionnement, la partie centrale (33a) de la masse pendulaire (33) s'appuie radialement vers l'extérieur sur le rouleau (36), ce dernier (36) s'appuyant lui-même radialement vers l'extérieur sur le support (26, 49), **caractérisé en ce que** la masse pendulaire (33) comporte au moins une partie latérale (33b) fixée à la partie centrale (33a) et conçue de façon à ce que le centre de gravité de la masse pendulaire (33) soit situé radialement à l'extérieur des zones de contact entre la partie centrale (33a) de la masse pendulaire (33) et le rouleau (36).

2. Dispositif selon la revendication 1, **caractérisé en ce que** la masse pendulaire (33) comporte deux parties latérales (33b) opposées, fixées à la partie centrale (33a) et s'étendant de part et d'autre du support (26, 49).

3. Dispositif selon la revendication 1 ou 2, **caractérisé en ce que** le support (26, 49) comporte au moins une fenêtre (29) dans laquelle est montée la partie centrale (33a) de la masse pendulaire (33).

4. Dispositif selon l'une des revendications 1 à 3, **caractérisé en ce que** la périphérie radialement externe de la partie centrale (33a) de la masse pendulaire (33) et la partie radialement externe du support (26, 49) comportent chacun une zone concave (31 a, 35) formant un chemin de roulement pour un rouleau (36).

5. Dispositif selon l'une des revendications 1 à 4, **caractérisé en ce que** chaque partie latérale (33b) est une plaque ayant une forme générale d'arc, dont la périphérie radialement externe (39) est située radialement à l'extérieur de la périphérie externe de la partie centrale (33a) de la masse pendulaire (33), en regard de la partie radialement externe du support (26, 49).

6. Dispositif selon l'une des revendications 1 à 5, **caractérisé en ce qu'**au moins l'une des parties latérales (33b) comporte un plot (41) inséré dans un trou (42) du support, ledit trou étant oblong en forme d'arc et ledit plot pouvant se déplacer le long de ce trou (42), ou inversement, le déplacement de la masse pendulaire (33) étant limité par butée du plot (41) sur les extrémités circonférentielles dudit trou (42).

7. Dispositif selon l'une des revendications 1 à 6, **caractérisé en ce que** la périphérie radialement interne et/ou les extrémités circonférentielles de la partie centrale (33a) de la masse pendulaire (33) comportent des moyens de butée déformables élastiquement (43), destinés à venir en appui contre le support (26, 49).

8. Dispositif selon l'une des revendications 1 à 7, **caractérisé en ce que** les extrémités circonférentielles (51) de la partie latérale (33b) de la masse pendulaire (33) sont aptes à venir en appui contre des organes de butée du support (49).

9. Dispositif selon l'une des revendications 1 à 8, **caractérisé en ce qu'**au moins une zone de la partie centrale (33a) de la masse pendulaire (33) est formée d'une pièce avec au moins l'une des parties latérales (33b).

10. Dispositif selon l'une des revendications 1 à 9, **caractérisé en ce que** les extrémités du rouleau (36) comportent des zones restreintes (53, 56) d'appui sur les parties latérales (33b) des masses pendulaires (33).

11. Dispositif de transmission de couple comportant un élément d'entrée de couple (1) et un élément de sortie de couple (19), **caractérisé en ce qu'**il comporte un dispositif d'amortissement pendulaire selon l'une des revendications 1 à 10, l'élément de sortie de couple comportant un voile annulaire (26) servant de support pour au moins une masse pendulaire (33), des organes élastiques (15) étant montés entre l'élément d'entrée de couple et le voile annulaire (26).

12. Dispositif de transmission de couple pour un véhicule automobile, comportant un élément d'entrée de couple (46), un élément de sortie de couple (47, 48), et au moins un groupe d'organes élastiques (15a, 15b) montés entre les éléments d'entrée (46) et de sortie (14, 48) de couple et agissant à l'encontre de la rotation de l'un desdits éléments par rapport à l'autre, les organes élastiques (15a, 15b) de ce groupe étant agencés en série par l'intermédiaire d'un organe de phasage (49) de façon à ce que les organes élastiques (15a, 15b) dudit groupe se déforment en phase les uns avec les autres, **caractérisé en ce qu'**il comporte un dispositif d'amortissement pendulaire selon l'une des revendications 1 à 10, l'organe de phasage (49) formant le support de la masse pendulaire (33).

## Patentansprüche

1. Pendelartige Dämpfungsvorrichtung, insbesondere für ein Kraftfahrzeuggetriebe, die mindestens eine pendelartige Masse (33) umfasst, von der ein zentraler Teil (33a) beweglich auf einem Träger (26, 49) montiert ist, der um eine Achse schwenken kann, und mindestens eine Walze (36), die radial zwischen der radial äußeren Peripherie des zentralen Teils (33a) und einem radial äußeren Teil des Trägers (26, 49) derart montiert ist, dass sich der zentrale Teil (33a) der pendelartigen Masse (33) beim Betrieb radial nach außen auf die Walze (36) stützt, wobei sich Letztere (36) selbst radial nach außen auf den Träger (26, 49) stützt, **dadurch gekennzeichnet, dass** die pendelartige Masse (33) mindestens einen seitlichen Teil (33b) umfasst, der an dem zentralen Teil (33a) befestigt und derart konzipiert ist, dass der Schwerpunkt der pendelartigen Masse (33) radial außerhalb der Kontaktbereiche zwischen dem zentralen Teil (33a) der pendelartigen Masse (33) und der Walze (36) liegt.

2. Vorrichtung nach Anspruch 1, **dadurch gekennzeichnet, dass** die pendelartige Masse (33) zwei einander entgegengesetzte seitliche Teile (33b) umfasst, die an dem zentralen Teil (33a) befestigt sind und sich zu beiden Seiten des Trägers (26, 49) erstrecken.

3. Vorrichtung nach Anspruch 1 oder 2, **dadurch gekennzeichnet, dass** der Träger (26, 49) mindestens ein Fenster (29) umfasst, in das der zentrale Teil (33a) der pendelartigen Masse (33) montiert ist.

4. Vorrichtung nach einem der Ansprüche 1 bis 3, **dadurch gekennzeichnet, dass** die radial äußere Peripherie des zentralen Teils (33a) der pendelartigen Masse (33) und der radial äußere Teil des Trägers (26, 49) jeweils einen konkaven Bereich (31a, 35) umfassen, der eine Fahrbahn für eine Walze (36) bildet.

5. Vorrichtung nach einem der Ansprüche 1 bis 4, **dadurch gekennzeichnet, dass** jeder seitliche Teil (33b) eine Platte ist, die eine allgemeine Bogenform hat, deren radial äußere Peripherie (39) radial außerhalb der äußeren Peripherie des zentralen Teils (33a) der pendelartigen Masse (33) gegenüber dem radial äußeren Teil des Trägers (26, 49) liegt.

6. Vorrichtung nach einem der Ansprüche 1 bis 5, **dadurch gekennzeichnet, dass** mindestens einer der seitlichen Teile (33b) einen Klotz (41) umfasst, der in eine Bohrung (42) des Trägers eingefügt ist, wobei die Bohrung länglich mit Bogenform ist, und wobei sich der Klotz entlang dieser Bohrung (42) bewegen kann, oder umgekehrt, dass die Bewegung der pendelartigen Masse (33) durch Anschlag des Klotzes (41) auf den umfänglichen Enden der Bohrung (42) begrenzt ist.

7. Vorrichtung nach einem der Ansprüche 1 bis 6, **dadurch gekennzeichnet, dass** die radial innere Peripherie und/oder die umfänglichen Enden des zentralen Teils (33a) der pendelartigen Masse (33) elastisch verformbare Anschlagmittel (43), die dazu bestimmt sind, gegen den Träger (26, 49) zum Aufliegen zu kommen, umfassen.

8. Vorrichtung nach einem der Ansprüche 1 bis 7, **dadurch gekennzeichnet, dass** die umfänglichen Enden (51) des seitlichen Teils (33b) der pendelartigen Masse (33) geeignet sind, gegen Anschlagorgane des Trägers (49) zum Aufliegen zukommen.

9. Vorrichtung nach einem der Ansprüche 1 bis 8, **dadurch gekennzeichnet, dass** mindestens ein Bereich des zentralen Teils (33a) der pendelartigen Masse (33) aus einem Stück mit mindestens einem der seitlichen Teile (33b) ausgebildet ist.

10. Vorrichtung nach einem der Ansprüche 1 bis 9, **dadurch gekennzeichnet, dass** die Enden der Walze (36) eingeschränkte Auflagebereiche (53, 56) auf den seitlichen Teilen (33b) der pendelartigen Massen (33) umfassen.

11. Drehmomentübertragungsvorrichtung, die ein Drehmomenteingangselement (1) und ein Drehmomentausgangselement (19) umfasst, **dadurch gekennzeichnet, dass** sie eine pendelartige Dämpfvorrichtung nach einem der Ansprüche 1 bis 10 umfasst, wobei das Drehmomentausgangselement eine ringförmige Abdeckung (26) umfasst, die als Träger für mindestens eine pendelartige Masse (33) dient, wobei elastische Organe (15) zwischen dem Drehmomenteingangselement und der ringförmigen Abdeckung (26) installiert sind.

12. Drehmomentübertragungsvorrichtung für ein Kraftfahrzeug, die ein Drehmomenteingangselement (46), ein Drehmomentausgangselement (47, 48) und mindestens eine Gruppe elastischer Organe (15a, 15b), die zwischen die Drehmomenteingangselemente (46) und Drehmomentausgangselemente (14, 48) montiert sind und gegen die Drehung eines der Elemente in Bezug zu dem anderen wirken, umfasst, wobei die elastischen Organe (15a, 15b) der Gruppe in Serie über ein Phasenorgan (49) derart eingerichtet sind, dass sich die elastischen Organe (15a, 15b) der Gruppe phasengleich miteinander verformen, **dadurch gekennzeichnet, dass** sie eine pendelartige Dämpfungsvorrichtung nach einem der Ansprüche 1 bis 10 umfasst, wobei das Phasenorgan (49) den Träger der pendelartigen Masse (33) bildet.

## Claims

1. Pendulum damping device, in particular for a motor vehicle transmission, comprising at least one pendulum mass (33) of which a central part (33a) is mounted movably on a support (26, 49) able to pivot about an axis, and at least one roller (36) mounted radially between the radially outer periphery of the central part (33a) and a radially outer part of the support (26, 49), in such a way that, during operation, the central part (33a) of the pendulum mass (33) bears radially outwardly on the roller (36), the latter (36) in turn bearing radially outwardly on the support (26, 49), **characterized in that** the pendulum mass (33) has at least one lateral part (33b) fixed to the central part (33a) and designed such that the centre of gravity of the pendulum mass (33) is situated radially outside the contact regions between the central part (33a) of the pendulum mass (33) and the roller (36).

2. Device according to Claim 1, **characterized in that** the pendulum mass (33) has two opposed lateral parts (33b) fixed to the central part (33a) and extending on either side of the support (26, 49).

3. Device according to Claim 1 or 2, **characterized in that** the support (26, 49) has at least one window (29) in which the central part (33a) of the pendulum mass (33) is mounted.

4. Device according to one of Claims 1 to 3, **characterized in that** the radially outer periphery of the central part (33a) of the pendulum mass (33) and the radially outer part of the support (26, 49) each have a concave region (31a, 35) forming a rolling track for a roller (36).

5. Device according to one of Claims 1 to 4, **characterized in that** each lateral part (33b) is a generally arc-shaped plate of which the radially outer periphery (39) is situated radially outside the outer periphery of the central part (33a) of the pendulum mass (33), facing the radially outer part of the support (26, 49).

6. Device according to one of Claims 1 to 5, **characterized in that** at least one of the lateral parts (33b) comprises a stud (41) inserted into a hole (42) in the support, the said hole being oblong with an arc shape and the said stud being able to move along this hole (42), or conversely the movement of the pendulum mass (33) being limited by abutment of the stud (41) against the circumferential ends of the said hole (42).

7. Device according to one of Claims 1 to 6, **characterized in that** the radially inner periphery and/or the circumferential ends of the central part (33a) of the pendulum mass (33) comprise elastically deformable stop means (43) intended to bear against the support (26, 49).

8. Device according to one of Claims 1 to 7, **characterized in that** the circumferential ends (51) of the lateral part (33b) of the pendulum mass (33) are able to bear against stop members of the support (49).

9. Device according to one of Claims 1 to 8, **characterized in that** at least one region of the central part (33a) of the pendulum mass (33) is formed in one piece with at least one of the lateral parts (33b).

10. Device according to one of Claims 1 to 9, **characterized in that** the ends of the roller (36) have restricted regions (53, 56) for bearing on the lateral parts (33b) of the pendulum masses (33).

11. Torque transmission device comprising a torque input element (1) and a torque output element (19), **characterized in that** it comprises a pendulum damping device according to one of Claims 1 to 10, the torque output element comprising an annular web (26) serving as support for at least one pendulum mass (33), elastic members (15) being mounted between the torque input element and the annular web (26).

12. Torque transmission device for a motor vehicle, comprising a torque input element (46), a torque output element (47, 48) and at least one group of elastic members (15a, 15b) mounted between the torque input element (46) and torque output element (14, 48) and acting counter to the rotation of one of the said elements with respect to the other, the elastic members (15a, 15b) of this group being arranged in series by way of a phasing member (49) in such a way that the elastic members (15a, 15b) of the said group deform in phase with one another, **characterized in that** it comprises a pendulum damping device according to one of Claims 1 to 10, the phasing member (49) forming the support of the pendulum mass (33).
